# EUROPÄISCHE PATENTSCHRIFT

(11) **EP 3 149 913 B1**
(45) Veröffentlichungstag und Bekanntmachung des Hinweises auf die Patenterteilung: **11.07.2018**
(21) Anmeldenummer: 15729336.6
(22) Anmeldetag: 27.05.2015
(51) Int. Cl.: H04L 29/06

(54) **SYSTEM UND VERFAHREN FÜR EINE SICHERE UND ANONYME KOMMUNIKATION IN EINEM NETZWERK**
SYSTEM AND METHOD FOR SECURE AND ANONYMOUS COMMUNICATION IN A NETWORK
SYSTÈME ET PROCÉDÉ POUR UNE COMMUNICATION SÛRE ET ANONYME DANS UN RÉSEAU

(30) Priorität: 28.05.2014 DE 102014008059
(43) Veröffentlichungstag der Anmeldung: 05.04.2017
(73) Patentinhaber: Qabel GmbH, 30159 Hannover (DE)
(72) Erfinder: ZUCKSCHWERDT, Christian W., 26131 Oldenburg (DE)
(74) Vertreter: Müller-Boré & Partner Patentanwälte PartG mbB
(86) Internationale Anmeldenummer: PCT/EP2015/001089
(87) Internationale Veröffentlichungsnummer: WO 2015/180842

(56) Entgegenhaltungen:
- US-A1- 2011 110 568
- US-B1- 6 266 704

## Beschreibung

Die vorliegende Erfindung betrifft ein Computersystem, ein computer-implementiertes Verfahren sowie ein Computerprogrammprodukt zum sicheren und anonymen Austausch von Daten über ein Netzwerk.

Netzwerke, insbesondere das Internet, ermöglichen es ihren Benutzern, mittels (mobiler) Endgeräte, immer und überall über das Internet mit anderen Benutzern Daten (z.B. Nachrichten) auszutauschen. Gleichzeitig steigt durch die rasante Entwicklung der Möglichkeiten zur Speicherung und Analyse von Daten der Bedarf an einer sicheren und anonymen Datenübertragung über das Internet. Daher ist es wünschenswert, elektronische Kommunikationssysteme bereitzustellen die dazu ausgelegt sind, über ein Netzwerk elektronisch versendete Daten (insbesondere Nachrichten) gegen unbefugtes Lesen, gegen Ausspionieren so genannter Metadaten dieser Daten sowie gegen eventuelle Manipulationen der Daten durch unbefugte Dritte zu schützen.

Ein *Netzwerk* ist entweder ein leitungs- bzw. drahtgebundenes Netz oder ein drahtloses Netz, z.B. ein Funknetz, das sich aus verschiedenen, primär selbständigen technischen bzw. elektronischen Systemen zusammensetzt und die Kommunikation einzelner Endgeräte untereinander ermöglicht, wie z.B. das Internet oder ein Intranet. Ein Netzwerk kann sich dabei aus einer Vielzahl unterschiedlich konzipierter Teilnetze zusammensetzen, welche über verschiedene Kommunikationsprotokolle miteinander verbunden sind.

Ein *Endgerät* ist ein Gerät, welches in der Lage ist, über leitungsgebundene Netze wie z.B. Ethernet oder Token Ring miteinander zu kommunizieren.

Ein *mobilen Endgerät* ist ein Gerät, welches in der Lage ist, in einem mobilen Netzwerk über lokale Netzwerke bzw. Local Area Networks (LANs), wie z.B. Wireless Fidelity (WiFi), oder überWeitverkehrsnetze bzw. Wide Area Networks (WANs) wie z.B. Global System for Mobile Communication (GSM), General Package Radio Service (GPRS), Enhanced Data Rates for Global Evolution (EDGE), Universal Mobile Telecommunications System (UMTS), High Speed Downlink/Uplink Packet Access (HSDPA, HSUPA), Long-Term Evolution (LTE), oder World Wide Interoperability for Microwave Access (WIMAX) drahtlos zu kommunizieren. Eine Kommunikation über weitere, gängige oder künftige Kommunikationstechnologien ist möglich. Der Begriff *mobiles Endgerät* beinhaltet insbesondere Smartphones, aber auch andere mobile Telefone bzw. Handys, Personal Digital Assistants (PDAs), Tablet PCs sowie alle weiteren geeigneten elektronischen Geräte, welche mit entsprechenden Technologien ausgestattet sind, um über das ein Netzwerk zu kommunizieren.

Bekannte Systeme zur Daten- bzw. Nachrichtenübertragung über ein (drahtloses oder drahtgebundenes) Netzwerk erfordern eine direkte Adressierung der Nachrichten. Auch ein verschlüsselter Nachrichtenaustausch, beispielsweise über das Hypertext Transfer Protocol Secure (HTTPS), setzt eine Authentifizierung der Kommunikationspartner (d.h. des Senders und des Empfängers) voraus, da dadurch sichergestellt wird, dass sich jeder Kommunikationspartner vor dem Aufbau einer sicheren, verschlüsselten Kommunikation über ein Netzwerk der Identität des jeweils anderen Kommunikationspartners vergewissern kann. Eine Daten- bzw. Nachrichtenübertragung beispielsweise über das Extensible Messaging and Presence Protocol (XMPP) ist sehr umfangreich und komplex, da eine Vielzahl an Erweiterungen und Methoden für die Nachrichtenübertragung bereitgestellt wird. Dadurch erhält der Server Einblicke in den Daten-bzw. Nachrichtenaustausch zwischen Sendern und Empfängern (d.h. Kommunikationspartnern) sowie in Bestandsdaten der jeweiligen Kommunikationspartner. Dies ermöglicht eine Analyse des entsprechenden Daten-bzw. Nachrichtenverkehrs durch den Server und durch eine dritte Partei.

Aufgabe der vorliegenden Erfindung ist es demnach, auf eine einfache, kostengünstige sowie sichere Weise eine anonyme, verschlüsselte Kommunikation (beispielsweise einen anonymen, verschlüsselten Nachrichtenaustausch) über ein Netzwerk bereitzustellen. Insbesondere sollen dabei ein oder mehrere der nachstehenden Aspekte zur sicheren Kommunikation über ein Netzwerk gewährleistet werden:
- Vertraulichkeit bzw. Confidentiality: Nur autorisierte Empfänger sollen in der Lage sein, Daten sowohl beim Zugriff auf gespeicherte Daten als auch während bzw. nach einer Datenübertragung zu lesen bzw. zu modifizieren;
- Integrität bzw. Integrity: Eine Verfälschung von Daten durch unbefugte Dritte muss verhindert werden;
- Anonymität bzw. Anonymity: kein Dritter soll Kenntnis darüber haben, zwischen welchen Parteien ein Datenaustausch stattgefunden hat.

US Patent US6266704 ist Stand der Technik bezüglich anonymer Kommunikation. Diese Aufgabe wird erfindungsgemäß durch die Merkmale der unabhängigen Ansprüche gelöst. Bevorzugte Ausführungsformen sind Gegenstand der abhängigen Ansprüche.

Gemäß eines ersten Aspekts der Erfindung wird ein Computersystem zum sicheren und anonymen Austausch von Nachrichten bereitgestellt, welche folgendes umfasst: Zumindest einen Nachrichtenserver, welcher ausgelegt ist, zumindest eine verschlüsselte Nachricht von zumindest einem Sender über das Netzwerk zu empfangen und die zumindest eine verschlüsselte Nachricht zumindest vorübergehend zu speichern. Zudem ist der zumindest eine Nachrichtenserver ausgelegt, die zumindest eine verschlüsselte Nachricht zumindest einem Empfänger zum Abrufen über das Netzwerk bereitzustellen. Dabei sind Daten über den zumindest einen Sender und über den zumindest einen Empfänger der zumindest einen verschlüsselten Nachricht verschlüsselt.

Bei einem Nachrichtenserver kann es sich um einen Server handeln, der ausgebildet ist, eingehende Nachrichten für einen späteren Abruf durch einen Empfänger zu puffern. Der Nachrichtenserver ist dabei über eine Identifikation, ID, adressierbar (wie weiter unten mit Bezug auf die Adressierung der Nachrichtenserver näher erläutert). Mit anderen Worten kann es sich bei dem Nachrichtenserver um einen Hardware - Server handeln, auf welchem Software installiert ist, die eine entsprechende Funktionalität, d.h. eine zumindest teilweise Speicherung zumindest einer über ein Netzwerk eingehenden verschlüsselten Nachricht sowie eine Bereitstellung der zumindest einen verschlüsselten Nachricht zum Abrufen über das Netzwerk an einen Empfänger. Vorzugsweise handelt es sich bei dem Hardware-Nachrichtenserver um einen einfachen, Representational State Transfer (REST) - konformen Server. Anders als bei Web-Services-orientierten Protokollen (z.B. Simple Object Access Protocol, SOAP), werden auf einem REST-konformen Server keine Funktionen, wie beispielsweise Remote Procedure Calls (RPC), selbst ausgeführt. Vielmehr führt jeder Daten-bzw. Nachrichtenaustausch mit dem Server zu einem Laden, Ändern, oder Anlegen eines Dokuments. Dies hat den Vorteil, dass eine dritte Partei keine Rückschlüsse über operationale Strukturen des Servers und über Intentionen des Senders ziehen kann.

Allerdings kann es sich bei einem Nachrichtenserver auch um einen Software-Server handeln, welcher als Softwareprogramm entsprechend einem Client-Server-Modell eine Funktionalität, d.h. eine zumindest teilweise Speicherung zumindest einer über ein Netzwerk eingehenden verschlüsselten Nachricht sowie eine Bereitstellung der zumindest einen verschlüsselten Nachricht zum Abrufen über das Netzwerk an einen Empfänger, bereitstellt. In diesem Fall können auf einem Hardware Server eine Vielzahl so genannter Nachrichtenserver implementiert sein, die jeweils über eine Identifikation, ID (wie weiter unten mit Bezug auf Adressierung der Nachrichtenservernäher näher erläutert) adressierbar sind.

Vorzugsweise werden die verschlüsselten Nachrichten auf dem Nachrichtenserver in einem Nachrichtenpuffer gepuffert, wobei der Nachrichtenpuffer in seiner Länge bzw. in seiner Speicherkapazität begrenzt ist. Vorzugsweise werden die verschlüsselten Nachrichten in einer First In First Out (FIFO)-Queue, die als Nachrichtenpuffer dient, gepuffert.

Dies hat den Vorteil, dass zwischen Sender und Empfänger kein direkter Datenaustausch stattfinden muss. Somit müssen Sender und Empfänger auch keine weitere Kenntnis voneinander, d.h. über tatsächliche Identitäten, Internet Protocol (IP)-Adressen oder eine Verfügbarkeit des jeweiligen an der Kommunikation beteiligten Senders und Empfängers, haben.

Im Gegensatz dazu benötigen bekannte Systeme zum Austausch von Nachrichten die jeweiligen IP-Adressen von Sender und Empfänger. Durch Kenntnis der IP-Adressen können Rückschlüsse über weitere Details eines Nachrichtenaustauschs, wie z.B. eine Erreichbarkeit von Sender und Empfänger, eine Antwortzeit (Latenz), und eine Erkennung einer Art des verwendeten Rechnersystems, z.B. des Betriebssystems, gezogen werden.

Vorzugsweise können die gepufferten, verschlüsselten Nachrichten, die sich auf dem Nachrichtenserver befinden, weder vom Sender noch vom Empfänger noch von einer dritten Partei modifiziert oder gelöscht bzw. entfernt werden. Allerdings können die Nachrichten bei ihrem Eingang auf dem Nachrichtenserver mit einem Zeitstempel (auch Timestamp genannt) versehen werden. Somit können auf dem Nachrichtenserver eingegangene Nachrichten nach einem Ablauf einer vorher bestimmbaren Zeitperiode verfallen, d.h. vom Nachrichtenserver automatisch gelöscht werden. Zudem bzw. alternativ dazu können die Nachrichten in Abhängigkeit von einem Speicherplatz, welcher dem Nachrichtenserver zur Verfügung steht, vom Nachrichtenserver gelöscht werden. Zudem oder alternativ können die Nachrichten in Abhängigkeit weiterer geeigneter Parameter vom Nachrichtenserver gelöscht werden.

Dass Daten über den zumindest einen Sender und den zumindest einen Empfänger der zumindest einen verschlüsselten Nachricht verschlüsselt sind hat den Vorteil, dass keine dritte Partei, welcher befugten oder unbefugten Zugriff auf die verschlüsselte Nachricht hat, insbesondere auch der Nachrichtenserver selbst, Rückschlüsse auf den Sender und den Empfänger des Nachrichtenaustausches ziehen kann. Somit ist eine anonyme Kommunikation zwischen Sender und Empfänger über den Nachrichtenserver gewährleistet.

Vorzugsweise umfassen die Daten über den zumindest einen Sender und den zumindest einen Empfänger der zumindest einen verschlüsselten Nachricht eine oder mehrere der folgende Daten:
- eine Senderadresse des zumindest einen Senders;
- eine Empfängeradresse des zumindest einen Empfängers;
- ein verwendetes Verschlüsselungsverfahren zum Verschlüsseln der zumindest einen verschlüsselten Nachricht;
- verwendete Verschlüsselungsparameter zum Verschlüsseln der zumindest einen verschlüsselten Nachricht.

Vorzugsweise sind Vorkehrungen für eine Verschlüsselung der Nachricht, d.h. zum Aushandeln eines zu verwendenden Verschlüsselungsverfahrens sowie zu entsprechend benötigten Verschlüsselungsparametern, dem zumindest einen Sender und dem zumindest einem Empfänger überlassen. Vorzugsweise handeln der Sender und der Empfänger Details zur Verschlüsselung über einen externen Server, also außerhalb des sicheren und anonymen Austauschs von Nachrichten über das Computersystem (Out-of-Band), aus. Dabei können sich der Sender und der Empfänger auf jedes bekannte bzw. geeignete, symmetrische Verschlüsselungsverfahren wie z.B. Advanced Encryption Standard (AES), Data Encryption Standard (DES), Triple-DES, International Data Encryption Algorithm (IDEA) oder jedes bekannte bzw. geeignete asymmetrische Verschlüsselungsverfahren, z.B. Rivest, Shamir und Adleman (RSA), einigen. Dies hat den Vorteil, dass der Nachrichtenserver keine Kenntnis über Verschlüsselungsdetails der verschlüsselten Nachricht hat, sondern nur in der Lage ist, die verschlüsselte Nachricht zu speichern. Somit kann weder der Nachrichtenserver, noch eine dritte Partei Rückschlüsse über Verschlüsselungsdetails der verschlüsselten Nachricht ziehen.

Die Daten über den zumindest einen Sender und den zumindest einen Empfänger der zumindest einen verschlüsselten Nachricht umfassen Metadaten über den Sender und entsprechend über den Empfänger. Insbesondere umfassen diese Daten: eine Senderadresse des zumindest einen Senders, eine Empfängeradresse des zumindest einen Empfängers, ein verwendetes Verschlüsselungsverfahren zum Verschlüsseln der zumindest einen verschlüsselten Nachricht und/oder verwendete Verschlüsselungsparameter zum Verschlüsseln der zumindest einen verschlüsselten Nachricht.

Dies hat den Vorteil, dass weder der Nachrichtenserver noch eine dritte Partei Rückschlüsse darüber ziehen kann, welche Daten über den Sender und den Empfänger zusammen mit der Nachricht vom Sender verschlüsselt wurden. Zudem verwendet der Nachrichtenserver lediglich einen Zeitpunkt des Nachrichteneingangs als Metadatum. Vorzugsweise erstellt der Nachrichtenserver einen Zeitstempel, auch Timestamp genannt, vom Empfangszeitpunkt der verschlüsselten Nachricht und speichert diesen zusammen mit der Nachricht in der FIFO-Queue. Vorzugsweise werden weitere Metadaten, die mit dem Empfangen der verschlüsselten Nachricht durch den Nachrichtenserver entstehen können, z.B. die IP-Adresse des Senders, verwendete HTTP-Header und ein Timing, vom Nachrichtenserver sofort verworfen.

Die Verschlüsselung der Daten hat den Vorteil, dass keine dritte Partei, insbesondere auch nicht der Nachrichtenserver selbst, irgendwelche Annahmen über die Struktur und/oder den Inhalt der zumindest einen verschlüsselten Nachricht machen kann.

Vorzugsweise sind die Daten über den zumindest einen Sender und den zumindest einen Empfänger zusammen mit der zumindest einen verschlüsselten Nachricht verschlüsselt.

Somit sind die Daten über den zumindest einen Sender und den zumindest einen Empfänger zusammen mit der zumindest einen verschlüsselten Nachricht vollständig unstrukturiert. Dies hat den Vorteil, dass die Daten über den Sender und den Empfänger nur mit Kenntnis der Verschlüsselungsparameter rekonstruiert werden können. Der Sender verschlüsselt die Nachricht und die Daten über den Sender und den Empfänger bevor dieser die so verschlüsselte Nachricht an den Nachrichtenserver sendet.

Optional kann eine Einigung zwischen dem zumindest einen Sender und dem zumindest einen Empfänger darüber, welche Daten über den Sender und den Empfänger zusammen mit der Nachricht verschlüsselt werden sollen, kann zusammen mit dem Aushandeln der Details zur Verschlüsselung über den externen Server ausgehandelt werden. Alternativ dazu kann der Sender dem Empfänger auch nach dem Senden der verschlüsselten Nachricht Out-of-Band mitteilen, welche Daten über den Sender und den Empfänger zusammen mit der Nachricht verschlüsselt wurden.

Diese Vorgehensweise hat den Vorteil, dass verschlüsselte Nachrichten über vorhandene Protokolle ausgetauscht werden können. Es ist lediglich zusätzlich zu einem gewöhnlichen Nachrichtenaustausch erforderlich, die entsprechenden Daten über den Sender und über den Empfänger zusammen mit der Nachricht selbst zu verschlüsseln. Vorzugsweise findet Senden, Empfangen und Abrufen der verschlüsselten Nachricht von über das Hypertext Transfer Protocol (HTTP) statt, wobei standardmäßige Internet Assigned Numbers Authority (IANA)-Port Nummern verwendet werden können. Die einzigen, nicht verschlüsselten Daten in der verschlüsselten Nachricht sind somit Daten bzw. Metadaten der HTTP-Kommunikation selbst. Optional kann die HTTP-Kommunikation über Transport Layer Security (TLS)-Verschlüsselung gesichert werden (HTTPS).

Somit können verschlüsselte Nachrichten sicher und anonym über das Netzwerk ausgetauscht werden, ohne dass sie von außen von gewöhnlichen Nachrichten unterschieden werden können. Nur mithilfe einer Deep Packet Inspection (DPI), bei welcher sowohl die Metadaten im Headerteil eines Datenpakets, als auch die Nutzdaten auf bestimmte Merkmale wie z.B. Protokollverletzungen bzw. Computerviren untersucht werden, kann festgestellt werden, dass es sich bei den verschlüsselten Nachrichten nicht um einen Nachrichten handelt. Doch selbst eine DPI erlaubt keine Analysen über den Inhalt der so verschlüsselten Nachrichten.

Vorzugsweise findet zu einem Zeitpunkt vor einem Empfangen der zumindest einen Nachricht durch den zumindest einen Nachrichtenserver eine Einigung auf eine Adresse des zumindest einen Nachrichtenservers zwischen dem zumindest einen Sender und dem zumindest einen Empfänger statt.

Vorzugsweise findet die Einigung auf die Adresse des zumindest eines Nachrichtenservers dabei außerhalb der Hauptkommunikationsform über den Nachrichtenserver, Out-of-Band, statt. Dabei kann der zumindest eine Nachrichtenserver über eine ID adressiert werden (wie weiter unten mit Bezug auf die Adressierung der Nachrichtenserver näher erläutert). Optional kann der Sender die verschlüsselte Nachricht an einen beliebigen Nachrichtenserver senden. Vorzugsweise teilt der Sender in diesem Fall die ID des gewählten Nachrichtenservers Out-of-Band mit.

Vorzugsweise speichert der zumindest eine Nachrichtenserver bei einem Empfangen und Speichern der zumindest einen verschlüsselten Nachricht einen Eingangszeitstempel der verschlüsselten Nachricht auf dem zumindest einen Nachrichtenserver.

Vorzugsweise löscht der zumindest eine Nachrichtenserver die empfangene Nachricht nach einer vorher bestimmten bzw. bestimmbaren Zeitperiode ab dem Eingangszeitstempel.

Dies hat den Vorteil, dass der Nachrichtenserver den Eingangszeitstempel als Schlüssel zum Abrufen neuer Nachrichten verwenden kann. So kann der Nachrichtenserver dem Empfänger nun sämtliche Nachrichten, die nach einem Zeitpunkt eines letzten Abrufs verschlüsselter Nachrichten durch den Empfänger auf dem Nachrichtenserver eingegangen sind, zukommen lassen.

Gemäß eines weiteren Aspekts der vorliegenden Erfindung wird die zugrunde liegende Aufgabe durch ein computer-implementiertes Verfahren zum sicheren und anonymen Austausch von Nachrichten über ein Netzwerk gelöst, wobei das Verfahren folgende Funktionen aufweist:

Empfangen, durch zumindest einen Nachrichtenserver, zumindest einer verschlüsselten Nachricht von zumindest einem Sender über das Netzwerk, wobei der zumindest eine Nachrichtenserver ausgelegt ist, die empfangene zumindest eine verschlüsselte Nachricht zumindest vorübergehend zu speichern. Der zumindest eine Nachrichtenserver stellt die zumindest eine verschlüsselte Nachricht zum Abrufen durch zumindest einen Empfänger über das Netzwerk bereit. Daten über den zumindest einen Sender und über den zumindest einen Empfänger der zumindest einen verschlüsselten Nachricht sind verschlüsselt.

Vorzugsweise umfassen die Daten über den zumindest einen Sender und den zumindest einen Empfänger der zumindest einen verschlüsselten Nachricht eine oder mehrere der folgende Daten:
- eine Senderadresse des zumindest einen Senders;
- eine Empfängeradresse des zumindest einen Empfängers;
- ein verwendetes Verschlüsselungsverfahren zum Verschlüsseln der zumindest einen verschlüsselten Nachricht;
- verwendete Verschlüsselungsparameter zum Verschlüsseln der zumindest einen verschlüsselten Nachricht.

Vorzugsweise sind die Daten über den zumindest einen Sender und den zumindest einen Empfänger zusammen mit der zumindest einen verschlüsselten Nachricht verschlüsselt.

Vorzugsweise findet zu einem Zeitpunkt vor einem Empfangen der zumindest einen Nachricht durch den zumindest einen Nachrichtenserver eine Einigung auf eine Adresse des zumindest einen Nachrichtenservers zwischen dem zumindest einen Sender und dem zumindest einen Empfänger statt.

Vorzugsweise speichert der zumindest eine Nachrichtenserver bei einem Empfangen und Speichern der zumindest einen verschlüsselten Nachricht einen Eingangszeitstempel der verschlüsselten Nachricht auf dem zumindest einen Nachrichtenserver.

Vorzugsweise löscht der zumindest eine Nachrichtenserver die empfangene Nachricht nach einer vorher bestimmten bzw. bestimmbaren Zeitperiode ab dem Eingangszeitstempel.

Gemäß eines weiteren Aspekts der vorliegenden Erfindung wird die zugrunde liegende Aufgabe durch ein Computerprogrammprodukt gelöst, welches Programmteile umfasst, welche, wenn in einem Computer geladen, zur Durchführung eines computer-implementierten Verfahrens zum sicheren und anonymen Austausch von Nachrichten über ein Netzwerk ausgelegt sind, wobei das computer-implementierte Verfahren folgende Funktionen aufweist:

Empfangen, durch zumindest einen Nachrichtenserver, zumindest einer verschlüsselten Nachricht von zumindest einem Sender über das Netzwerk, wobei der zumindest eine Nachrichtenserver ausgelegt ist, die empfangene zumindest eine verschlüsselte Nachricht zumindest vorübergehend zu speichern. Der zumindest eine Nachrichtenserver stellt die zumindest eine verschlüsselte Nachricht zum Abrufen durch zumindest einen Empfänger über das Netzwerk bereit. Daten über den zumindest einen Sender und über den zumindest einen Empfänger der zumindest einen verschlüsselten Nachricht sind verschlüsselt.

Vorzugsweise umfassen die Daten über den zumindest einen Sender und den zumindest einen Empfänger der zumindest einen verschlüsselten Nachricht eine oder mehrere der folgende Daten:
- eine Senderadresse des zumindest einen Senders;
- eine Empfängeradresse des zumindest einen Empfängers;
- ein verwendetes Verschlüsselungsverfahren zum Verschlüsseln der zumindest einen verschlüsselten Nachricht;
- verwendete Verschlüsselungsparameter zum Verschlüsseln der zumindest einen verschlüsselten Nachricht.

Vorzugsweise sind die Daten über den zumindest einen Sender und den zumindest einen Empfänger zusammen mit der zumindest einen verschlüsselten Nachricht verschlüsselt.

Vorzugsweise findet zu einem Zeitpunkt vor einem Empfangen der zumindest einen Nachricht durch den zumindest einen Nachrichtenserver eine Einigung auf eine Adresse des zumindest einen Nachrichtenservers zwischen dem zumindest einen Sender und dem zumindest einen Empfänger statt.

Vorzugsweise speichert der zumindest eine Nachrichtenserver bei einem Empfangen und Speichern der zumindest einen verschlüsselten Nachricht einen Eingangszeitstempel der verschlüsselten Nachricht auf dem zumindest einen Nachrichtenserver.

Vorzugsweise löscht der zumindest eine Nachrichtenserver die empfangene Nachricht nach einer vorher bestimmten bzw. bestimmbaren Zeitperiode ab dem Eingangszeitstempel.

Bevorzugte Ausführungsformen werden im Folgenden mit Bezug auf begleitende Zeichnungen beispielhaft beschrieben Es wird angemerkt, dass selbst wenn Ausführungsformen separat beschrieben sind, einzelne Merkmale davon zu zusätzlichen Ausführungsformen kombiniert werden können. Es zeigen:
- **Figur 1**: einen Sender und einen Empfänger, die über einen Nachrichtenserver Nachrichten anonym und sicher austauschen können;
- **Figur 2**: ein Verfahren, mit welchem ein Sender und ein Empfänger Nachrichten anonym und sicher über einen Nachrichtenserver austauschen können;
- **Figur 3**: ein beispielhaftes System zum Implementieren der Erfindung.

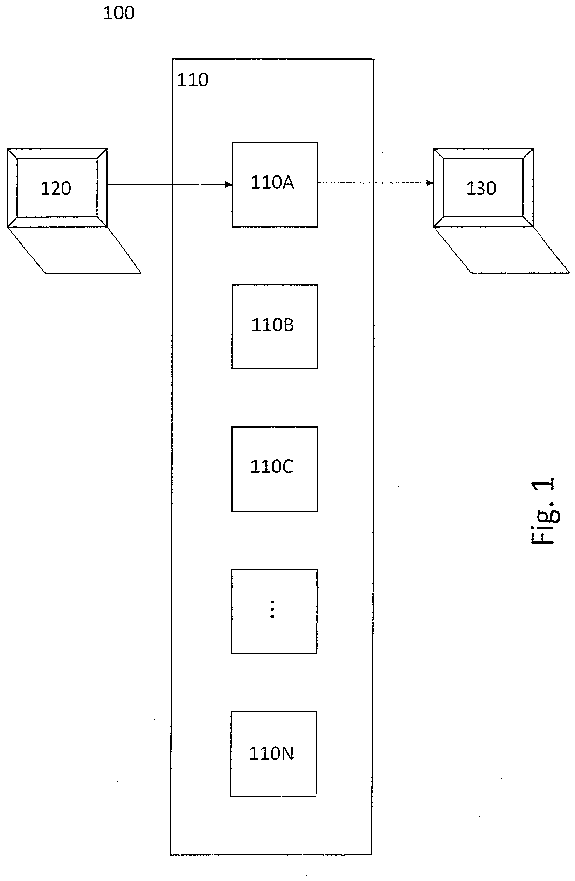

**Figur 1** zeigt ein System, welches einen Server umfasst. Vorzugsweise sind auf dem Server N Nachrichtenserver implementiert. Bei einem Nachrichtenserver handelt es sich um einen Server, welcher in der Lage ist, eingehende, verschlüsselte Nachrichten für einen späteren Abruf durch einen Empfänger zumindest vorübergehend zu speichern bzw. zu puffern. Der Nachrichtenserver ist dabei über eine Identifikation, ID, adressierbar (wie weiter unten mit Bezug auf die Adressierung der Nachrichtenserver näher erläutert).

Bei einem Nachrichtenserver kann es sich um einen Hardware-Server handeln (nicht in Figur 1 gezeigt), auf welchem Software installiert ist, welche eine entsprechende Funktionalität zur zumindest teilweisen Speicherung eingehender verschlüsselter Nachrichten sowie zur Bereitstellung einer Abrufmöglichkeit verschlüsselter Nachrichten durch Empfänger bereitstellt. Vorzugsweise handelt es sich bei dem Hardware-Nachrichtenserver um einen einfachen, Representational State Transfer (REST) - konformen Server, bei dem jeder Daten-bzw. Nachrichtenaustausch mit dem Server zu einem Laden, Ändern, oder Anlegen eines Dokuments führt. Dies hat den Vorteil, dass eine dritte Partei keine Rückschlüsse über operationale Strukturen des Servers und über Intentionen des Senders ziehen kann. Der Nachrichtenserver kann dabei eigenständig, beispielsweise hinter einem Reverse-Proxy laufen. Alternativ kann der Nachrichtenserver in einer vorhandenen HTTP-Umgebung, z.B. PHP oder Ruby on Rails laufen.

Alternativ dazu kann es sich bei einem Nachrichtenserver auch um einen Software-Server handeln, welcher als Softwareprogramm entsprechend einem Client-Server-Modell die Funktionalität zur zumindest teilweisen Speicherung eingehender verschlüsselter Nachrichten sowie zur Bereitstellung einer Abrufmöglichkeit verschlüsselter Nachrichten durch den Empfänger bereitstellt. Im diesem Fall können auf einem Hardware Server bzw. einem anderen geeigneten Computersystem eine Vielzahl von Nachrichtenserver implementiert sein, die jeweils über eine eigene Identifikation, ID adressierbar sind (wie weiter unten mit Bezug auf die Adressierung der Nachrichtenserver näher erläutert).

Ein oder mehrere Sender können verschlüsselte Nachrichten an einen oder mehrere Nachrichtenserver schicken. Dem Sender stehen zum Senden verschlüsselter Nachrichten an einen Nachrichtenserver jene Methoden (wie weiter unten mit Bezug auf die Representational State Transfer (REST)-Methoden erläutert) zur Verfügung. Es sind jedoch auch weiter geeignete Methoden zum Senden der verschlüsselten Nachrichten vom Nachrichtenserver denkbar.

Die verschlüsselten Nachrichten werden auf dem Nachrichtenserver in einem Nachrichtenpuffer zumindest vorübergehend gespeichert bzw. gepuffert, wobei der Nachrichtenpuffer in seiner Länge bzw. in seiner Speicherkapazität begrenzt sein kann. Vorzugsweise werden die verschlüsselten Nachrichten in einer First In First Out (FIFO)-Queue, die als Nachrichtenpuffer dient, gepuffert.

Die gepufferten, verschlüsselten Nachrichten, die sich auf dem Nachrichtenserver befinden, können weder vom Sender noch vom Empfänger oder einer beliebigen dritten Partei modifiziert oder gelöscht werden. Somit wird es keiner Partei ermöglicht, die auf dem Nachrichtenserver eingegangenen, verschlüsselten Nachrichten zu verfälschen bzw. zu löschen.

Die auf einem Nachrichtenserver eingehenden, verschlüsselten Nachrichten können mit einem Zeitstempel bzw. einer Timestamp versehen werden. Entsprechend können Nachrichten nach einem Ablauf einer vorher bestimmbaren Zeitspanne bzw. Zeitablauf verfallen, d.h. vom Nachrichtenserver selbst wieder aus der FIFO-Queue gelöscht bzw. entfernt werden. Zudem bzw. Alternativ dazu können die Nachrichten in Abhängigkeit von einem Speicherplatz, welcher dem Nachrichtenserver zur Verfügung steht, vom Nachrichtenserver gelöscht werden. Zudem oder alternativ können die Nachrichten in Abhängigkeit weiterer geeigneter Parameter vom Nachrichtenserver gelöscht werden.

Dass die verschlüsselten Nachrichten verschlüsselte Daten über den Sender und den Empfänger umfassen hat den Vorteil, dass kein Dritter, welcher befugten oder unbefugten Zugriff auf die verschlüsselten Daten hat, Rückschlüsse auf die Kommunikationsparteien, also den Sender und Empfänger, des Nachrichtenaustausches ziehen kann. Somit ist eine anonyme Kommunikation zwischen Sender und Empfänger gewährleistet, und die eigentliche Kommunikation zwischen dem Sender und dem Empfänger kann nicht nachvollzogen werden. Zudem hat eine Verschlüsselung von Daten über den Sender und den Empfänger den Vorteil, dass der Nachrichtenserver selbst keine Annahmen über die Struktur und den Inhalt der verschlüsselten Nachrichten machen kann.

Vorzugsweise haben sich der zumindest eine Sender und der zumindest eine Empfänger, welche Nachrichten über zumindest einen Nachrichtenserver austauschen, vorher, d.h. vor dem eigentlichen Nachrichtenaustausch, auf ein Verschlüsselungsverfahren geeinigt.

Dabei kann sich das Sender-Empfänger Paar auf jedes bekannte bzw. geeignete, symmetrische Verschlüsselungsverfahren wie z.B. Advanced Encryption Standard (AES), Data Encryption Standard (DES), Triple-DES, International Data Encryption Algorithm (IDEA) oder jedes bekannte bzw. geeignete asymmetrische Verschlüsselungsverfahren, z.B. Rivest, Shamir und Adleman (RSA), einigen.

Vorzugsweise einigen sich die Kommunikationsparteien dabei auf das Verschlüsselungsverfahren außerhalb der Hauptkommunikationsform über das Computersystem bzw. über den Nachrichtenserver (Out-of-Band).

Dies hat den Vorteil, dass für den sicheren und anonymen Austausch verschlüsselter Nachrichten über das System zwischen dem zumindest einen Sender und dem zumindest einem Empfänger kein direkter Datenaustausch stattfinden muss. Somit müssen die Kommunikationsparteien keine weitere Kenntnis voneinander, d.h. über tatsächliche Identitäten, Internet Protocol (IP)-Adressen oder eine jeweilige Verfügbarkeit, haben.

Vorzugsweise einigen sich die Kommunikationsparteien, d.h. zumindest ein Sender und zumindest ein Empfänger, welche verschlüsselte Nachrichten über das Computersystem austauschen, vorher Out-of-Band auf eine Adresse eines Nachrichtenservers, der sich auf dem Computersystem befindet, über welchen zumindest eine verschlüsselte Nachricht ausgetauscht werden soll. Jeder Nachrichtenserver kann über eine ID (wie weiter unten mit Bezug auf die Adressierung der Nachrichtenserver näher erläutert) adressiert werden. Optional kann der Sender die verschlüsselte Nachricht an einen beliebigen Nachrichtenserver senden. Vorzugsweise teilt der Sender in diesem Fall dem Empfänger die ID des gewählten Nachrichtenservers Out-of-Band mit.

Vorzugsweise sind die Daten über den Sender und den Empfänger Kommunikationsparteien zusammen mit der Nachricht verschlüsselt. Die Verschlüsselung der Daten über den Sender und Empfänger hat den Vorteil, dass so verschlüsselte Nachrichten über vorhandene Protokolle versendet werden können. Gleichzeitig hat keine dritte Partei die Möglichkeit, Informationen über den Sender und den Empfänger einer Nachricht zu erhalten, so dass die Anonymität der Kommunikationsparteien gewährleistet ist.

Die Daten über den zumindest einen Sender und den zumindest einen Empfänger der zumindest einen verschlüsselten Nachricht umfassen Metadaten über den Sender und entsprechend über den Empfänger. Insbesondere umfassen diese Daten: eine Senderadresse des zumindest einen Senders, eine Empfängeradresse des zumindest einen Empfängers, ein verwendetes Verschlüsselungsverfahren zum Verschlüsseln der zumindest einen verschlüsselten Nachricht und/oder verwendete Verschlüsselungsparameter zum Verschlüsseln der zumindest einen verschlüsselten Nachricht.

Dies hat den Vorteil, dass weder der Nachrichtenserver noch eine dritte Partei Rückschlüsse darüber ziehen kann, welche Daten über den Sender und den Empfänger zusammen mit der Nachricht vom Sender verschlüsselt wurden. Zudem kennt der Nachrichtenserver lediglich den Zeitpunkt des Empfangens der Nachricht vom Sender als Metadatum. Vorzugsweise erstellt der Nachrichtenserver einen Zeitstempel, auch Timestamp genannt, vom Empfangszeitpunkt der verschlüsselten Nachricht und speichert diesen zusammen mit der Nachricht in der FIFO-Queue. Vorzugsweise werden weitere Metadaten, die mit dem Empfangen der verschlüsselten Nachricht durch den Nachrichtenserver entstehen, z.B. die IP-Adresse des Senders, verwendete HTTP-Header und ein Timing, vom Nachrichtenserver sofort verworfen.

Vorzugsweise sind Vorkehrungen für eine Verschlüsselung der Nachricht, d.h. zum Aushandeln eines zu verwendenden Verschlüsselungsverfahrens sowie zu entsprechend benötigten Verschlüsselungsparametern, dem zumindest einen Sender und dem zumindest einem Empfänger überlassen. Vorzugsweise handeln der Sender und der Empfänger Details zur Verschlüsselung über einen externen Server, also außerhalb des sicheren und anonymen Austauschs von Nachrichten über das Computersystem (Out-of-Band), insbesondere außerhalb des Nachrichtenservers, aus. Dabei können sich der Sender und der Empfänger auf jedes bekannte bzw. geeignete, symmetrische Verschlüsselungsverfahren wie z.B. Advanced Encryption Standard (AES), Data Encryption Standard (DES), Triple-DES, International Data Encryption Algorithm (IDEA) oder jedes bekannte bzw. geeignete asymmetrische Verschlüsselungsverfahren, z.B. Rivest, Shamir und Adleman (RSA), einigen. Dies hat den Vorteil, dass der Nachrichtenserver keine Kenntnis über Verschlüsselungsdetails der verschlüsselten Nachricht hat, sondern nur in der Lage ist, die verschlüsselte Nachricht zu speichern. Somit kann weder der Nachrichtenserver, noch eine dritte Partei Rückschlüsse über Details zur Verschlüsselung der verschlüsselten Nachricht ziehen.

Vorzugsweise sind die Daten über den zumindest einen Sender und den zumindest einen Empfänger zusammen mit der zumindest einen verschlüsselten Nachricht verschlüsselt.

Somit sind die Daten über den zumindest einen Sender und den zumindest einen Empfänger zusammen mit der zumindest einen verschlüsselten Nachricht vollständig unstrukturiert. Dies hat den Vorteil, dass die Daten über den Sender und den Empfänger nur mit Kenntnis der Verschlüsselungsparameter rekonstruiert werden können. Der Sender verschlüsselt die Nachricht und die Daten über den Sender und den Empfänger bevor dieser die so verschlüsselte Nachricht an den Nachrichtenserver sendet.

Optional kann eine Einigung zwischen Sender und Empfänger darüber, welche Daten über den Sender und den Empfänger zusammen mit der Nachricht verschlüsselt werden sollen, kann zusammen mit dem Aushandeln der Details zur Verschlüsselung über den externen Server ausgehandelt werden. Alternativ dazu kann der Sender dem Empfänger auch nach dem Senden der verschlüsselten Nachricht Out-of-Band mitteilen, welche Daten über den Sender und den Empfänger zusammen mit der Nachricht verschlüsselt wurden.

Vorzugsweise findet die Kommunikation über das Hypertext Transfer Protocol (HTTP) oder das Hypertext Transfer Protocol Secure (HTTPS) Protokoll statt, wobei standardmäßige Internet Assigned Numbers Authority (IANA)-Port Nummern verwendet werden können. Die einzigen, nicht verschlüsselten Daten in der verschlüsselten Nachricht sind somit Daten bzw. Metadaten der HTTP-Kommunikation selbst. Optional kann die HTTP-Kommunikation über Transport Layer Security (TLS)-Verschlüsselung (HTTPS) gesichert werden. Eine Kommunikation über HTTP oder HTTPS unter einer Verwendung von Standard-Ports (IANA) hat den Vorteil, dass eventuelle Einschränkungen wie z.B. geblockte Simpel Mail Transfer Protocol (SMTP)-Ports umgangen werden.

Zusätzlich kann sichergestellt werden, dass der Austausch zumindest einer verschlüsselten Nachricht zwischen zumindest einen Sender, zumindest einem Nachrichtenserver und zumindest einem Empfänger über beliebige Proxies und Proxy-Kaskaden abgewickelt werden kann, um den Datenschutz und die Datensicherheit der zumindest einen verschlüsselten Nachrichten, sowie die Sicherstellung der Anonymität der Kommunikationsparteien zusätzlich zu unterstützen.

Mit dem System können verschlüsselte Nachrichten sicher und anonym über das Netzwerk ausgetauscht werden, ohne dass sie von außen von gewöhnlichen Nachrichten, die über ein Netzwerk ausgetauscht werden, unterschieden werden können.

Lediglich durch eine Deep Packet Inspection (DPI), bei welcher sowohl die Metadaten im Headerteil eines Datenpakets, als auch die Nutzdaten auf bestimmte Merkmale wie z.B. Protokollverletzungen bzw. Computerviren untersucht werden, kann festgestellt werden, dass es sich nicht um gewöhnliche Nachrichten handelt. Doch selbst eine DPI erlaubt einem Dritten keinerlei Analysen über die Kommunikationsparteien sowie den Inhalt der verschlüsselten Nachrichten.

Vorzugsweise ruft der zumindest eine Empfänger der zumindest einen verschlüsselten Nachricht von dem mit dem Sender ausgehandelten Nachrichtenserver alle verschlüsselten Nachrichten ab, die sich zum Zeitpunkt des Abrufens auf dem Nachrichtenserver befinden. Dem zumindest einem Empfänger stehen dabei die Methoden wie weiter unten mit Bezug auf die Representational State Transfer (REST)-Methoden erläutert, zur Verfügung. Es sind jedoch auch weitere, gängige Methoden zum Abrufen der Nachrichten vom Nachrichtenserver denkbar.

Vorzugsweise verwendet der Nachrichtenserver dabei für jede verschlüsselte Nachricht nur einen Zeitpunkt eines Eingangs der verschlüsselten Nachricht, d.h. einen Zeitstempel (auch Timestamp genannt), beim Nachrichtenserver als Metadaten. Vorzugsweise wird der Zeitstempel zusammen mit der Nachricht in der FIFO-Queue gespeichert.

Dies hat den Vorteil, dass der Nachrichtenserver den Zeitstempel als Schlüssel zum Abrufen neuer Nachrichten durch den zumindest einen Empfänger verwenden kann. Der zumindest eine Empfänger hat so die Möglichkeit, lediglich jene verschlüsselten Nachrichten vom Nachrichtenserver Server abzufragen, welche nach einem Zeitpunkt eines letzten Abrufens verschlüsselter Nachrichten neu auf dem Nachrichtenserver eingegangen sind ("If-Modified-Since-Abruf", wie weiter unten mit Bezug auf die Representational State Transfer (REST)-Methoden näher erläutert).

Erst durch eine Entschlüsselung der so abgerufenen, verschlüsselten Nachrichten kann der Empfänger feststellen, ober er eine der empfangenen Nachrichten erfolgreich entschlüsseln kann und somit ein tatsächlicher Empfänger einer oder mehrerer der abgerufenen verschlüsselten Nachrichten ist. Es handelt sich somit um ein so genanntes Subscribe-to-Broadcast-per-Polling-Verfahren.

Dies hat den Vorteil, dass von außen lediglich festgestellt werden kann, dass jemand Nachrichten über das Computersystem versendet bzw. empfängt, allerdings können keine Rückschlüsse über die individuellen Kommunikationspartner, d.h. über den zumindest einen Sender und den zumindest einen Empfänger, gezogen werden. Somit ist die Anonymität des zumindest einen Senders und zumindest einen Empfängers beim Austausch von Nachrichten gesichert.

Das mit Bezug auf Figur 1 erläuterte System ermöglicht es zumindest einem Sender und zumindest einem Empfänger, einen asynchronen Nachrichtenaustausch in einem Netzwerk anonym und sicher durchzuführen.

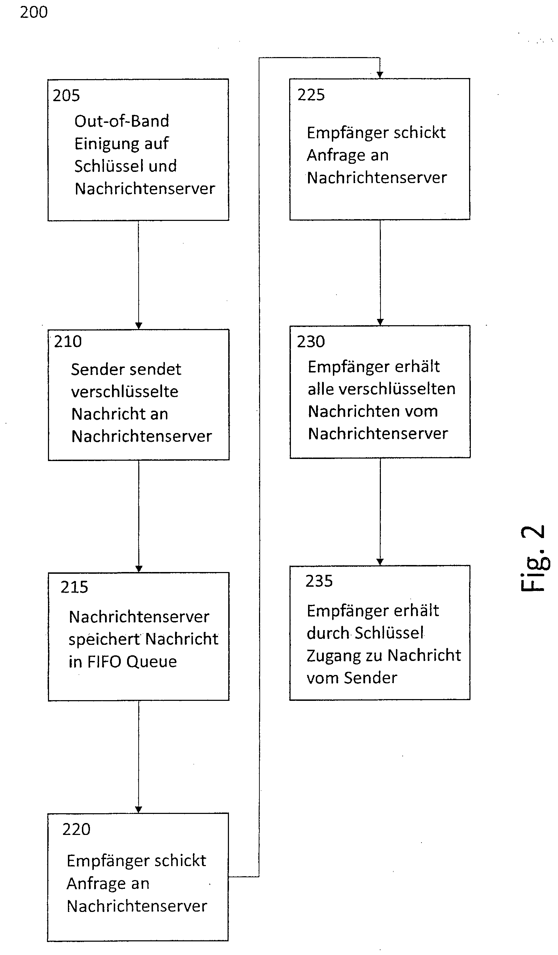

**Figur 2** zeigt ein Verfahren zum sicheren Austausch von Nachrichten über ein Computersystem, wie mit Bezug auf Figur 1 beschrieben.

Im **Schritt 205** einigen sich zumindest ein Sender und ein Empfänger, welche verschlüsselte Nachrichten anonym und sicher über das Computersystem wie mit Bezug auf Figur 1 beschrieben, Out-of-Band, d.h. außerhalb der Hauptkommunikationsform über zumindest einen Nachrichtenserver, auf ein Verschlüsselungsverfahren.

Dabei können sich der Sender und Empfänger auf jedes bekannte bzw. geeignete, symmetrische Verschlüsselungsverfahren wie z.B. Advanced Encryption Standard (AES), Data Encryption Standard (DES), Triple-DES, International Data Encryption Algorithm (IDEA) oder asymmetrische Verschlüsselungsverfahren, z.B. Rivest, Shamir und Adleman (RSA), einigen.
Zudem einigen sich der zumindest eine Sender und der zumindest eine Empfänger Out-of-Band auf eine Adresse des zumindest einen Nachrichtenservers, der sich auf dem Computersystem befindet, über welchen ein Nachrichtenaustausch stattfinden soll. Jeder Nachrichtenserver kann über eine ID adressiert werden (wie weiter unten mit Bezug auf die Adressierung der Nachrichtenserver genauer erläutert).

Optional kann der Sender die verschlüsselte Nachricht an einen Beliebigen Nachrichtenserver schicken, ohne dass vorher eine Einigung zwischen Sender und Empfänger auf eine Adresse eines Nachrichtenservers stattgefunden hat. In diesem Fall teilt der Sender dem Empfänger die ID des Nachrichtenservers, an den er die Nachricht gesendet hat, Ouf-of-Band mit.

In **Schritt 210** verschlüsselt der zumindest eine Sender zumindest eine Nachricht mit einem Schlüssel entsprechend dem in Schritt 205 ausgehandelten Verschlüsselungsverfahren. Die so verschlüsselte Nachricht sendet der zumindest eine Sender an den zumindest einen Nachrichtenserver, auf weichen er sich in Schritt 205 mit dem zumindest Empfänger geeinigt hat. Dabei kann der Sender den Nachrichtenserver über eine ID adressieren (wie unten mit Bezug auf die Adressierung der Nachrichtenserver genauer erläutert).

Daten über den Sender und Empfänger werden dabei zusammen mit der Nachricht verschlüsselt. Die Verschlüsselung von Daten über den Sender und Empfänger hat den Vorteil, dass die Nachricht sicher und anonym über vorhandene Protokolle verschickt werden kann. Insbesondere hat weder der Nachrichtenserver noch eine dritte Partei die Möglichkeit, Informationen über den Sender und den Empfänger der Nachricht zu erhalten, so dass die Anonymität der Kommunikationsparteien gewährleistet ist.

Die Kommunikation, d.h. das Senden der verschlüsselten Nachricht an den Nachrichtenserver sowie das Abrufen der Nachricht vom Nachrichtenserver durch den Empfänger findet über das Hypertext Transfer Protocol (HTTP) oder das Hypertext Transfer Protocol Secure (HTTPS) Protokoll statt, wobei standardmäßige Internet Assigned Numbers Authority (IANA)-Port Nummern verwendet werden können. Die einzigen, nicht verschlüsselten Daten in der verschlüsselten Nachricht sind somit Daten bzw. Metadaten der HTTP-Kommunikation selbst. Optional kann die HTTP-Kommunikation über Transport Layer Security (TLS)-Verschlüsselung (HTTPS) gesichert werden. Eine Kommunikation über HTTP oder HTTPS unter einer Verwendung von Standard-Ports (IANA) hat den Vorteil, dass eventuelle Einschränkungen wie z.B. geblockte Simpel Mail Transfer Protocol (SMTP)-Ports umgangen werden.

Der Sender kann die Nachricht mit den Methoden, die weiter unten mit Bezug auf die unterstützen Representational State Transfer (REST)-Methoden erläutert, an den Nachrichtenserver senden.

Zusätzlich kann sichergestellt werden, dass der Nachrichtenaustausch zwischen Sender, Nachrichtenserver und Empfänger über beliebige Proxies und Proxy-Kaskaden abgewickelt wird. Dadurch werden der Datenschutz und die Datensicherheit der verschlüsselten Nachricht sowie die Sicherstellung der Anonymität von Sender und Empfänger zusätzlich unterstützt.

In **Schritt 215** speichert der adressierte Nachrichtenserver die vom Empfänger empfangene, verschlüsselte Nachricht in einer FIFO-Queue bzw. einem Nachrichtenpuffer. Dort werden die verschlüsselten Nachrichten zumindest vorübergehend gespeichert bzw. gepuffert. Die FIFO-Queue kann dabei in ihre Länge bzw. in ihrer Speicherkapazität begrenzt sein.

Die auf dem Nachrichtenserver eingehende, verschlüsselte Nachricht kann zusätzlich mit einem Zeitstempel bzw. einer Timestamp über den Eingangszeitpunkt der Nachricht beim Nachrichtenserver versehen werden. Den Zeitstempel verwendet der Nachrichtenserver dabei als Metadatum und speichert ihn zusammen mit der eingegangenen verschlüsselten Nachricht in der FIFO-Queue.

Dieses Metadatum kann der Nachrichtenserver als Schlüssel zum Abrufen neuer Nachrichten verwenden. Der zumindest eine Empfänger kann so lediglich jene verschlüsselten Nachrichten vom in Schritt ausgehandelten Nachrichtenserver abrufen, welche nach einem Zeitpunkt eines letzten Abrufens neu auf dem Nachrichtenserver eingegangen sind ("If-Modified-Since-Abruf", wie weiter unten mit Bezug auf die Representational State Transfer (REST)-Methoden näher erläutert).

Die gepufferte, verschlüsselte Nachricht kann weder vom Sender noch vom Empfänger noch von einer dritten Partei modifiziert bzw. gelöscht werden.

In **Schritt 220** sendet der zumindest eine Empfänger eine Anfrage an den zuvor mit dem Sender ausgehandelten Nachrichtenserver, ob dort verschlüsselte Nachrichten eingegangen sind. Der Empfänger einer Nachricht kann dabei von dem mit dem Sender ausgemachten Nachrichtenserver alle verschlüsselten Nachrichten abrufen, die zum Zeitpunkt des Abrufs auf dem Nachrichtenserver gespeichert sind. Dem Empfänger stehen dabei die Methoden wie weiter unten mit Bezug auf die Representational State Transfer (REST)-Methoden erläutert, zur Verfügung. Es sind jedoch auch weitere, geeignete Methoden zum Abrufen der Nachrichten vom Nachrichtenserver denkbar. Alternativ dazu kann ein Empfänger lediglich jene verschlüsselten Nachrichten vom Nachrichtenserver Server abrufen, welche seit einem letzten Abrufen neu auf dem Nachrichtenserver eingegangen sind ("If-Modified-Since-Abruf", wie weiter unten mit Bezug auf die Representational State Transfer (REST)-Methoden näher erläutert).

In **Schritt 230** erhält der Empfänger alle verschlüsselten Nachrichten, die sich auf dem zuvor mit dem Sender ausgehandelten Nachrichtenserver befinden (normales Abrufen) bzw. alle verschlüsselten Nachrichten, die seit einem Zeitpunkt einer letzten Anfrage bei dem Nachrichtenserver eingegangen sind ("If-Modified-Since-Abruf").

In **Schritt 235** kann der zumindest Empfänger durch einen Schlüssel entsprechend des im Schritt 205 ausgehandelten Verschlüsselungsverfahrens zumindest eine der abgerufenen Nachrichten entschlüsseln.

Da die verschlüsselten Nachrichten auf dem Nachrichtenserver nur verschlüsselte Daten über einen Sender und zumindest einen Empfänger der verschlüsselten Nachrichten beinhalten, ist es dem Empfänger zunächst unmöglich, die für ihn bestimmte Nachricht aus den auf dem Nachrichtenserver befindlichen Nachrichten zu selektieren. Daher ruft der Empfänger jeweils alle verschlüsselten Nachrichten ab, die sich auf dem Nachrichtenserver befinden (Normaler Abruf) bzw. die seit einem Zeitpunkt einer letzten Anfrage auf dem Nachrichtenserver eingegangen sind ("If-Modified-Since-Abruf"). Erst durch die tatsächliche Entschlüsselung kann der Empfänger feststellen, dass er der tatsächliche Empfänger der Nachricht ist. Es handelt sich somit um ein so genanntes Subscribe-to-Broadcast-per-Polling-Verfahren.

Diese Vorgehensweise hat den Vorteil, dass jede dritte Partei lediglich feststellen kann, dass Nachrichten über das System ausgetauscht werden, allerdings können keine Rückschlüsse über die individuellen Kommunikationspartner, d.h. den Sender und den Empfänger, gezogen werden. Somit ist die Anonymität von Sender und Empfänger beim Austausch von Nachrichten gesichert.

### Adressierung der Nachrichtenserver

Nachrichtenserver, wie sie oben mit Bezug auf Figuren 1 und 2 erläutert, werden vorzugsweise mit einem Bitwert einer vorbestimmten bzw. vorbestimmbaren Länge als ID identifiziert. Die Kodierung der ID erfolgt nach dem Schema "URL Friendly Base64" gemäß dem RFC Standard RFC 45648 "Base 64 Encoding with URL and Filename Safe Alphabet". Dabei handelt es sich um ein Verfahren zur Kodierung von 8-Bit-binärdaten in eine Zeichenfolge, die nur aus lesbaren, unabhängigen ASCII-Zeichen besteht. Es ermöglicht dabei einen problemlosen Transport beliebiger Binärdaten.

Vorzugsweise enthält jede ID eines jeden Nachrichtenservers einen 256 Bit bzw. 32 Byte sicheren Zufallswert. Ein sicherer Zufallswert ist ein Wert, der von einem softwarebasierten Zufallszahlengenerator zufällig, d.h. mit gleichen Wahrscheinlichkeiten für alle Werte, bestimmt wird. Dies hat den Vorteil, dass es nicht möglich ist, den Wert einzugrenzen oder vorab zu erraten. Dieser Zufallswert entspricht 43 ASCII-Bytes. Um die Bytes als Buchstabenkette abzubilden, kann mit Base 64, einem Verfahren zur Kodierung von 8-Bit-Binärdaten, eine 6-zu-8-Kodierung durchgeführt werden. Eine 6-zu-8-Kodierung bedeutet, dass jeweils 6 Bit mit einem Byte pro Zeichen dargestellt werden. Somit werden 3 Bytes mit einer Kette von 4 Buchstaben pro Zeichen dargestellt und es ergibt sich eine Kette von 43 Zeichen (43 ASCII-Bytes). Dies hat den Vorteil, dass die Sicherheit verschlüsselter Nachrichten, die auf einer Vielzahl von Nachrichtenservem gespeichert sind, zudem erhöht wird. Insbesondere sind die IDs bzw. Adressen der Nachrichtenserver nicht konsekutiv, so dass es einer dritten Partei nicht möglich ist, Nachrichten mehrerer Nachrichtenserver durch Probieren abzurufen bzw. eine Adresse eines Nachrichtenservers bei Kenntnis einer Adresse eines anderen Nachrichtenservers mit signifikanter Wahrscheinlichkeit zu raten.

Vorzugsweise befinden sich N Nachrichtenserver auf einem Server. Der Server selbst enthält alle möglichen, möglicherweise nicht-manifestierten Nachrichtenserver-IDs. Dies hat den Vorteil, dass der Server nicht belegte Nachrichtenserver nicht speichern muss. Der Server stellt lediglich die Möglichkeit bereit, bei Bedarf weiteren Speicherplatz zur Verfügung zu stellen. Solche nicht belegten Nachrichtenserver sind folglich (noch) nicht existent, so dass der Speicherplatz, der dem Server zur Verfügung steht, (noch) nicht reserviert oder belegt ist. Vorzugsweise stellt der Server N Speicherbereiche zur Verfügung. Sobald ein Nachrichtenserver zum Speichern verschlüsselter Nachrichten adressiert wird, wird diesem Nachrichtenserver mittels einer Hashfunktion einem Speicherbereich zugeordnet. Somit liegt die Anzahl möglicher Nachrichtenserver bei Verwendung einer 256 Bit Nachrichtenserver-ID bei ca. 1 × 10⁷⁷.

Jeder Nachrichtenserver speichert die an ihn adressierten, verschlüsselten Nachrichten vorzugsweise in einer First-In-First-Out (FIFO) Queue geordnet nach einem Einlieferungsdatum der Nachricht. Eine Nachrichtenverwaltung findet dabei gesondert nach den jeweiligen Nachrichtenservern statt.

Vorzugsweise setzt sich jede ID bzw. jeder Uniform Resource Identifier (URI) bzw. Uniform Resource Locator (URL) eines jeden Nachrichtenservers aus den folgenden Komponenten zusammen:
- einem verwendeten Protokoll, z.B. HTTPS oder HTTP;
- einer verwendeten Server-Adresse, z.B. IPv4 oder IPv6 Adresse, wobei im Falle einer Verwendung von einem nicht durch die IANA standardisiertem Port die Port-Nummer angehängt wird;
- ein Service-Pfad, welcher den Basis-Pfad des Servers darstellt, z.B. eine URL eines Hypertext-Preprocessor (PHP) - Skripts oder ein Mapping im Reverse-Proxy. Dabei schließt der Service-Pfad den führenden Schrägstrich ("/") ein;
- Identifikation des Nachrichtenservers.

Eine ID bzw. URI bzw. URL jedes Nachrichtenservers ist nur gültig, wenn sie mit der ID des Nachrichtenservers schließt.

Die oben genannten Anforderungen einer gültigen ID bzw. URI bzw. URL eines Nachrichtenservers kann in der Backus-Naur-Form gemäß dem World-Wide-Web Consortiums (W3C) wie folgt dargestellt werden:

```
   url ::= protocol "://" serviceaddress servicepath "/"
          nachrichtenserverid
   protocol ::= "https" | "http"
   serveraddress ::= IPv4 | IPv6 | DNSName
   serverport ::= "1" - "65535"
    serviceaddress ::= serveraddress (":" serverport) ?
    servicepath ::= "/" [URLChars, "/"] *
    friendlybase64char ::= ["A" - "Z", "a" - "z", "0" - "9", "-", "_"]
    nachrichtenserverid ::= <43>*friendlybase64char
```

Beispielsweise könnte eine gültige ID eines Nachrichtenservers wie folgt aussehen:
http://d.example:1234/tools/nachrichtenserver/xzjall...aatr42

### Representational State Transfer (REST)-Methoden

Vorzugsweise stehen für einen anonymen und sicheren Nachrichtenaustausch, wie oben mit Bezug auf Figuren 1 und 2 erläutert, folgende REST-Methoden zur Verfügung:
GET: Mit der GET-Methode bzw. HEAD-Anfrage kann ein Empfänger sämtliche, sich auf einem Nachrichtenserver befindliche Nachrichten abrufen.

Sendet ein Empfänger eine Anfrage mittels einer GET-Methode an einen Nachrichtenserver, sind folgende Rückgabewerte möglich:
- Eine Fehlermeldung HTTP 400 falls die Nachrichtenserver-ID in der URL fehlt oder ungültig ist;
- Eine Not-Found-Fehlermeldung HTTP 404 falls der Nachrichtenserver keine verschlüsselten Nachrichten enthält;
- Eine OK-Meldung HTTP 200 falls der Nachrichtenserver verschlüsselte Nachrichten enthält. Entsprechend sendet der Nachrichtenserver eine HTTP Antwort auf die GET-Methode, mit welcher alle sich auf dem Nachrichtenserver befindlichen Nachrichten an den Empfänger gesendet werden.

Alternativ dazu kann ein Empfänger sämtliche, seit einem letzten Abrufdatum neu auf einem Nachrichtenserver eingegangene Nachrichten abrufen ("If-Modified-Since-Abruf"). Der Nachrichtenserver speichert die verschlüsselten Nachrichten in einer FIFO-Queue und versieht dabei jede Nachricht mit einem Zeitstempel, auch Timestamp genannt, des Eingangszeitpunkts. Sendet der Empfänger eine Anfrage mit einem "If-Modified-Since"-Header, d.h. mit einem Header in der Form "If-Modified-Since: DATUMSANGABE", so empfängt der Empfänger lediglich alle Nachrichten, die seit der DATUMSANGABE auf dem Nachrichtenserver eingegangen sind.

In diesem Fall sind, wenn ein Empfänger eine Anfrage über einen einer GET-Methode an einen Nachrichtenserver sendet, folgende Rückgabewerte möglich:
- Eine Fehlermeldung HTTP 400 falls die Nachrichtenserver-ID in der URL fehlt oder ungültig ist;
- Eine Not-Found-Fehlermeldung HTTP 404 falls der Nachrichtenserver keine verschlüsselten Nachrichten enthält;
- Eine Not-Modified-Fehlermeldung HTTP 304 falls der Nachrichtenserver keine verschlüsselten Nachrichten, welche seit einer letzten "If-Modified-Since"-Anfrage neu hinzugekommen sind, enthält;
- Eine OK-Meldung HTTP 200 falls der Nachrichtenserver verschlüsselte Nachrichten enthält, welche seit der letzten "If-Modified-Since"-Anfrage neu hinzugekommen sind. Entsprechend sendet der Nachrichtenserver eine HTTP Antwort auf die GET-Methode, mit welcher alle neu hinzugekommenen, verschlüsselten Nachrichten an den Empfänger gesendet werden.

Ein HTTP-body kann optional als Multipurpose Internat Mail Extensions (MIME)-Multipart Nachricht jeder einzelnen Nachricht zurückgegeben werden. Dabei hat jede MIME-Multipart Nachricht folgende Merkmale:
- Der "Content-Type" ist "multipart/mixed";
- Jeder einzelne Part hat einen "Content-Type" von "application/octetstream" und eine "Date"-Header;
- Bei den Nachrichten handelt es sich um unkodierte 8 Bit Streams.

Bei standardisierten Anfragen (z.B. HTTP-GET) wird als Antwort auf die Anfrage ein komplettes Dokument, welches sich aus verschiedenen Teilen, d.h. den einzelnen Nachrichten, zusammensetzt, zurückgegeben. Beim MIME-Multipart-Verfahren hingegen werden diese Teile, d.h. die einzelnen Nachrichten, nach dem MIME-Multipart Verfahren abgetrennt.

HEAD: Mit der HEAD-Methode bzw. HEAD-Anfrage kann ein Empfänger ermitteln, ob ein Nachrichtenserver gefüllt ist oder ob eine neue Nachricht eingetroffen ist. Jede HEAD-Methode fordert Metadaten zu verschlüsselten Nachrichten vom Nachrichtenserver an.

Sendet ein Empfänger eine Anfrage mittels einer HEAD-Methode an einen Nachrichtenserver, sind folgende Rückgabewerte möglich:
- Eine Fehlermeldung HTTP 400 falls die Nachrichtenserver-ID in der URL fehlt oder ungültig ist;
- Eine Not-Found-Fehlermeldung HTTP 404 falls der Nachrichtenserver keine verschlüsselten Nachrichten enthält;
- Eine OK-Meldung HTTP 200 falls der Nachrichtenserver verschlüsselte Nachrichten enthält.

Alternativ dazu kann ein Empfänger mittels einer HEAD-Methode anfragen, ob seit einem letzten Abrufdatum neue verschlüsselte Nachrichten auf einem Nachrichtenserver eingegangen sind ("If-Modified-Since-Abruf"). In diesem Fall sind, folgende Rückgabewerte möglich:
- Eine Fehlermeldung HTTP 400 falls die Nachrichtenserver-ID in der URL fehlt oder ungültig ist;
- Eine Not-Found-Fehlermeldung HTTP 404 falls der Nachrichtenserver keine verschlüsselten Nachrichten enthält;
- Eine Not-Modified-Fehlermeldung HTTP 304 falls der Nachrichtenserver keine verschlüsselten Nachrichten, welche seit einer letzten "If-Modified-Since"-Anfrage neu hinzugekommen sind, enthält;
- Eine OK-Meldung HTTP 200 falls der Nachrichtenserver verschlüsselte Nachrichten enthält, welche seit der letzten "If-Modified-Since"-Anfrage neu hinzugekommen sind.

Bei jeder HEAD-Methode bzw. HEAD-Anfrage wird kein HTTP-body zurückgegeben.

POST: Mit einer POST-Methode bzw. POST-Anfrage kann ein Sender eine verschlüsselte Nachricht an einen Nachrichtenserver schicken. Dabei ist es irrelevant, ob sich auf dem Nachrichtenserver bereits ein oder mehrere verschlüsselte Nachrichten befinden oder ob sich keine verschlüsselte Nachricht auf dem Nachrichtenserver befindet. Bei POST-Methoden werden folgende Rückgabewerte unterstützt:
- Eine Fehlermeldung HTTP 400 falls die Nachrichtenserver-ID in der URL fehlt oder ungültig ist;
- Eine OK-Meldung HTTP 200 falls die verschlüsselte Nachricht vom Sender erfolgreich am Nachrichtenserver angekommen ist. In diesem Fall wird die Verschlüsselte Nachricht auf dem Nachrichtenserver zumindest vorübergehend gespeichert. Die verschlüsselte Nachricht muss dem Nachrichtenserver als HTTP-Body übergeben werden, wobei es sich bei dem HTTP-Body um einen unkodierten 8-Bit Stream handelt. Es wird kein HTTP-body vom Nachrichtenserver zurückgegeben.

Diese klare Begrenzung des Umfangs möglicher Methoden bzw. Operationen für die sichere und anonyme Übertragung von Nachrichten über ein Netzwerk, wie oben erläutert, ermöglicht ein einfaches Einrichten eines Nachrichtenservers bzw. eines Servers, auf welchem ein- oder mehrere Nachrichtenserver implementiert sind. Somit ist wird eine einfache Möglichkeit bereitgestellt, einen Nachrichtenserver einzurichten und sicher zu betreiben, so dass jeder Sender und jeder Empfänger verschlüsselte Nachrichten über einen Nachrichtenserver, wie weiter oben mit Bezug auf Figuren 1 und 2 erläutert, anonym und sicher auszutauschen kann. Da keinerlei Benutzeridentifikation stattfindet, wird auch keine Benutzerverwaltung benötigt. Auch eine Verwendung von Cookies ist überflüssig. Somit kann das System jedem Benutzer offen und öffentlich zugänglich gemacht werden, ohne dabei die Sicherheit und die Anonymität der Kommunikationsparteien einzubüßen.

Eine vollständige Verschleierung darüber, dass überhaupt eine Kommunikation stattfindet, ist kaum möglich, schließlich sind notwendige IP-Verbindungen prinzipiell sichtbar. Allerdings kann eine zusätzliche Verschleierung der Tatsache, dass überhaupt eine Netzwerkkommunikation im System wie oben mit Bezug auf Figuren 1 und 2 erläutert, stattfindet Systems erreicht werden, indem zusätzliche Schichten, wie z.B. The Onion Routing (Tor), verwendet werden.

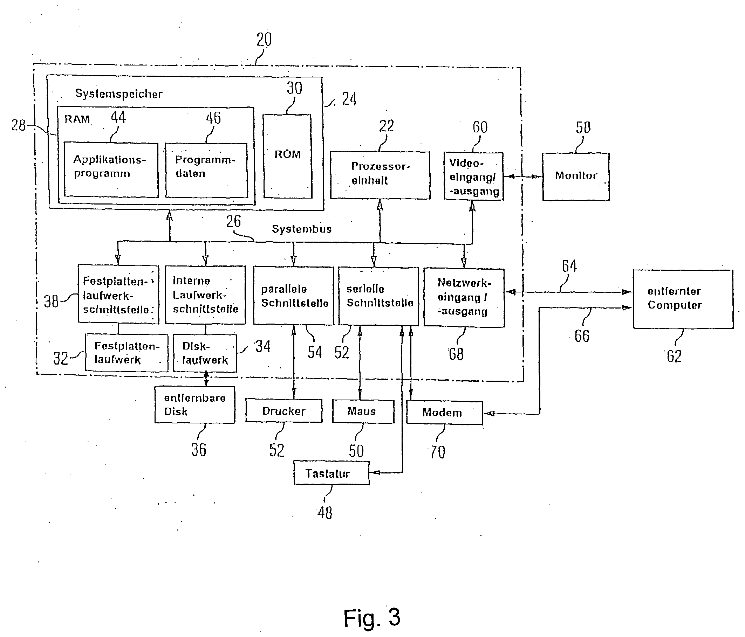

Bezugnehmend auf **Figur 3** wird ein beispielhaftes System zum Implementieren der Erfindung beschrieben. Ein beispielhaftes System umfasst eine universelle Rechnereinrichtung in der Form einer herkömmlichen Rechnerumgebung 20 z.B. ein "personal Computer" (PC) 20, mit einer Prozessoreinheit 22, einem Systemspeicher 24 und einem Systembus 26, welcher eine Vielzahl von Systemkomponenten, unter anderem den Systemspeicher 24 und die Prozessoreinheit 22 verbindet. Die Prozessoreinheit 22 kann arithmetische, logische und/oder Kontrolloperationen durchführen, indem auf den Systemspeicher 24 zugegriffen wird. Der Systemspeicher 24 kann Informationen und/oder Instruktionen zur Verwendung in Kombination mit der Prozessoreinheit 22 speichern. Der Systemspeicher 24 kann flüchtige und nichtflüchtige Speicher, beispielsweise "random access memory" (RAM) 28 und "Nur-Lesespeicher" (ROM) 30 beinhalten. Ein Grund-Eingabe-Ausgabe-System (BIOS), das die grundlegenden Routinen enthält, welche helfen, Informationen zwischen den Elementen innerhalb des PCs 20, beispielsweise während des Hochfahrens, zu transferieren, kann in dem ROM 30 gespeichert sein. Der Systembus 26 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 20 kann weiterhin ein Festplattenlaufwerk 32 zum Lesen oder Schreiben einer Festplatte (nicht gezeigt) aufweisen und ein externes Disklaufwerk 34 zum Lesen oder Schreiben einer entfernbaren Disk 36 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 32 und das externe Disklaufwerk 34 sind jeweils mit dem Systembus 26 über eine Festplattenlaufwerkschnittstelle 38 und eine externe Disklaufwerkschnittstelle 40 verbunden. Die Laufwerke und die zugeordneten computerlesbaren Medien stellen einen nichtflüchtigen Speicher computerlesbarer Instruktionen, Datenstrukturen, Programm-Modulen und anderer Daten für den PC 20 zur Verfügung. Die Datenstrukturen können die relevanten Daten zum Implementieren eines wie oben beschriebenen Verfahrens aufweisen. Obwohl die beispielshaft beschriebene Umgebung eine Festplatte (nicht gezeigt) und eine externe Disk 42 verwendet, ist für den Fachmann offensichtlich, dass andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw..

Eine Vielzahl von Programm-Modulen, insbesondere ein Betriebssystem (nicht gezeigt) ein oder mehrere Applikationsprogramme 44, oder Programm-Module (nicht gezeigt) und Programmdaten 46, können auf der Festplatte, der externen Disk 42, dem ROM 30 oder dem RAM 28 gespeichert werden. Die Applikationsprogramme können zumindest einen Teil der Funktionalität, wie in Fig. 1 oder Fig. 2 gezeigt, umfassen.

Ein Benutzer kann Kommandos und Information, wie oben beschrieben, in den PC 20 anhand von Eingabevorrichtungen, wie z.B. einer Tastatur bzw. eines Keyboards 48 und einer Computermaus 50 eingeben. Andere Eingabevorrichtungen (nicht gezeigt) können ein Mikrofon und/andere Sensoren, einen Joystick, ein Spielpolster bzw. - kissen, einen Scanner oder ähnliches umfassen. Diese oder andere Eingabevorrichtungen können mit der Prozessoreinheit 22 anhand einer seriellen Schnittstelle 52 verbunden sein, welche mit dem System 26 geköppelt ist, oder können anhand anderer Schnittstellen, wie z.B. einer parallelen Schnittstelle 54, eines Spieleports oder eines universellen seriellen Busses (USB) verbunden sein. Weiterhin kann Information mit einem Drucker 56 gedruckt werden. Der Drucker 56 und andere parallele Eingabe/Ausgabevorrichtungen können mit der Prozessoreinheit 22 durch die parallele Schnittstelle 54 verbunden sein. Ein Monitor 58 oder andere Arten von Anzeigevorrichtung(en) ist/sind mit dem Systembus 26 mittels einer Schnittstelle, wie z.B. eines Videoeingang/-ausgangs 60 verbunden. Zusätzlich zu dem Monitor kann die Rechnerumgebung 20 andere periphere Ausgabevorrichtungen (nicht gezeigt) wie z.B. Lautsprecher oder akustische Ausgänge umfassen.

Die Rechnerumgebung 20 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 20 in einer vernetzten Umgebung arbeiten, wobei Verbindungen zu einem oder mehreren elektronischen Vorrichtungen verwendet werden. Fig. 3 stellt die mit einem "remote computer" bzw. entfernten Computer 62 vernetzte Rechnerumgebung dar. Der entfernte Computer 62 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 20 oben beschriebenen Elemente umfassen. Die logischen Verbindungen, wie sie in Fig. 3 dargestellt sind, umfassen ein "local area network" (LAN) 64 und ein "wide area network" (WAN) 66. Solche Netzwerkumgebungen sind alltäglich in Büros, firmenweiten Computernetzwerken, Intranetzen und dem Internet.

Wenn eine Rechnerumgebung 20 in einer LAN-Netzwerkumgebung verwendet wird, kann die Rechnerumgebung 20 mit dem LAN 64 durch einen Netzwerkeingang/- ausgang 68 verbunden sein. Wenn die Rechnerumgebung 20 in einer WAN-Netzwerkumgebung verwendet wird, kann die Rechnerumgebung 20 ein Modem 70 oder andere Mittel zum Herstellen einer Kommunikation über das WAN 66 umfassen. Das Modem 70, welches intern und extern bezüglich der Rechnerumgebung 20 sein kann, ist mit dem Systembus 26 mittels der seriellen Schnittstelle 52 verbunden. In der Netzwerkumgebung können Programm-Module, welche relativ zu der Rechnerumgebung 20 dargestellt sind, oder Abschnitte davon in einer entfernten Speichereinrichtung gespeichert sein, welche an oder von einem entfernten Computer 62 zugreifbar bzw. systemeigen sind. Weiterhin können andere Daten, welche für das oben beschriebene Verfahren bzw. System relevant sind, auf oder von dem entfernten Computer 62 zugreifbar vorliegen.

### Bezugszeichenliste

- 20: Rechnerumgebung
- 22: Prozessoreinheit
- 24: Systemspeicher
- 26: Systembus
- 28: random access memory (RAM)
- 30: Nur-Lesespeicher (ROM)
- 32: Festplattenlaufwerk
- 34: Disklaufwerk
- 36: entfernbare Disk
- 38: Festplattenlaufwerkschnittstelle
- 40: Disklaufwerkschnittstelle
- 42: externe Disk
- 44: Applikationsprogramm
- 46: Programmdaten
- 48: Tastatur
- 50: Computermaus
- 52: serielle Schnittstelle
- 54: parallele Schnittstelle
- 56: Drucker
- 58: Monitor
- 60: Videoeingang/ -ausgang
- 62: entfernter Computer
- 64: "local area network" (LAN)
- 66: "wide area network" (WAN)
- 68: Netzwerkeingang/ -ausgang
- 70: Modem
- 100: Computersystem
- 110: (Hardware-) Server
- 110A...N: Nachrichtenserver
- 120: Sender
- 130: Empfänger

## Patentansprüche

1. Computersystem (100) zum sicheren und anonymen Austausch von Nachrichten über ein Netzwerk, umfassend:
zumindest einen Nachrichtenserver (110 A ... 110 N), welcher ausgelegt ist:
- zumindest eine verschlüsselte Nachricht von zumindest einem Sender (120) über das Netzwerk zu empfangen und die zumindest eine verschlüsselte Nachricht zumindest vorübergehend zu speichern; und
- die zumindest eine verschlüsselte Nachricht zumindest einem Empfänger (130) zum Abrufen über das Netzwerk bereitzustellen;
wobei Daten über den zumindest einen Sender (120) und über den zumindest einen Empfänger (130) der zumindest einen verschlüsselten Nachricht verschlüsselt sind.

2. Computersystem (100) nach Anspruch 1, wobei die Daten über den zumindest einen Sender (120) und den zumindest einen Empfänger (130) der zumindest einen verschlüsselten Nachricht ein oder mehrere der folgenden Daten umfassen:
- eine Senderadresse des zumindest einen Senders;
- eine Empfängeradresse des zumindest einen Empfängers;
- ein verwendetes Verschlüsselungsverfahren zum Verschlüsseln der zumindest einen verschlüsselten Nachricht;
- verwendete Verschlüsselungsparameter zum Verschlüsseln der zumindest einen verschlüsselten Nachricht.

3. Computersystem (100) nach einem der vorangehenden Ansprüche, wobei die Daten über den zumindest einen Sender (120) und den zumindest einen Empfänger (130) zusammen mit der zumindest einen verschlüsselten Nachricht verschlüsselt sind.

4. Computersystem (100) nach einem der vorangehenden Ansprüche, wobei zu einem Zeitpunkt vor einem Empfangen der zumindest einen Nachricht durch den zumindest einen Nachrichtenserver (110 A ... 110 N) eine Einigung auf eine Adresse des zumindest einen Nachrichtenservers (110 A ... 110 N) zwischen dem zumindest einen Sender (120) und dem zumindest einen Empfänger (130) stattfindet.

5. Computersystem (100) nach einem der vorangehenden Ansprüche, wobei der zumindest eine Nachrichtenserver (110 A ... 110 N) bei einem Empfangen und Speichern der zumindest einen verschlüsselten Nachricht einen Eingangszeitstempel der verschlüsselten Nachricht auf dem zumindest einen Nachrichtenserver (110 A ... 110 N) speichert;
wobei der zumindest eine Nachrichtenserver (110 A ... 110 N) die empfangene Nachricht nach einer vorher bestimmten bzw. bestimmbaren Zeitperiode ab dem Eingangszeitstempel löscht.

6. Computer-implementiertes Verfahren zum sicheren und anonymen Austausch von Nachrichten über ein Netzwerk, umfassend:
Empfangen, durch zumindest einen Nachrichtenserver (110A ... 110N), zumindest einer verschlüsselten Nachricht von zumindest einem Sender (120) über das Netzwerk, wobei der zumindest eine Nachrichtenserver (110A ... 110N) ausgelegt ist, die empfangene zumindest eine verschlüsselte Nachricht zumindest vorübergehend zu speichern; und
Bereitstellen, durch den zumindest einen Nachrichtenserver (110A ... 110N), der zumindest einen verschlüsselten Nachricht zum Abrufen durch zumindest einen Empfänger (130) über das Netzwerk;
wobei Daten über den zumindest einen Sender (120) und über den zumindest einen Empfänger (130) der zumindest einen verschlüsselten Nachricht verschlüsselt sind.

7. Computer-implementiertes Verfahren nach Anspruch 6, wobei die Daten über den zumindest einen Sender (120) und den zumindest einen Empfänger (130) der zumindest einen verschlüsselten Nachricht ein oder mehrere der folgenden Daten umfassen:
- eine Senderadresse des zumindest einen Senders (120); und/oder
- eine Empfängeradresse des zumindest einen Empfängers (130); und/oder
wobei die Daten über den zumindest einen Sender (120) und über den zumindest einen Empfänger (130) zusammen mit der zumindest einen verschlüsselten Nachricht verschlüsselt sind.

8. Computer-implementiertes Verfahren nach einem der Ansprüche 6 oder 7, wobei zu einem Zeitpunkt vor einem Empfangen der zumindest einen Nachricht durch den zumindest einen Nachrichtenserver (110 A ... 110 N) eine Einigung auf eine Adresse des zumindest einen Nachrichtenservers (110 A ... 110 N) zwischen dem zumindest einen Sender (120) und dem zumindest einen Empfänger (130) stattfindet.

9. Computer-implementiertes Verfahren nach einem der Ansprüche 6-8, wobei der zumindest eine Nachrichtenserver (110 A ... 110 N) bei einem Empfangen und Speichern der zumindest einen verschlüsselten Nachricht einen Eingangszeitstempel der verschlüsselten Nachricht auf dem zumindest einen Nachrichtenserver (110 A ... 110 N) speichert;
wobei der zumindest eine Nachrichtenserver (110 A ... 110 N) die empfangene Nachricht nach einer vorher bestimmten bzw. bestimmbaren Zeitperiode ab dem Eingangszeitstempel löscht.

10. Computerprogrammprodukt umfassend Programmteile, welche, wenn in einem Computer geladen, zur Durchführung eines computer-implementierten Verfahrens nach einem der Ansprüche 6 bis 9 ausgelegt sind.

## Claims

1. A computer system (100) for a secure and anonymous exchange of messages over a network, comprising:
at least one message server (110 A ... 110 N), which is adapted to:
- receive at least one encrypted message from at least one transmitter (120) over the network and to store the at least one encrypted message at least temporarily; and
- provide the at least one encrypted message to at least one receiver (130) for retrieval over the network;
wherein data of the at least one transmitter (120) and of the at least one receiver (130) of the at least one encrypted message is encrypted.

2. The computer system (100) according to claim 1, wherein the data of the at least one transmitter (120) and of the at least one receiver (130) of the at least one encrypted message comprises one or more of the following data:
- a transmitter address of the at least one transmitter;
- a receiver address of the at least one receiver;
- an encryption method used to encrypt the at least one encrypted message;
- encryption parameters used to encrypt the at least one encrypted message.

3. The computer system (100) according to one of the preceding claims, wherein the data of the at least one transmitter (120) and of the at least one receiver (130) is encrypted together with the at least one encrypted message.

4. The computer system (100) according to one of the preceding claims, wherein the at least one transmitter (120) and the at least one receiver (130) agree on an address of the at least one message server (110 A ... 110 N) at a time prior to reception of the at least one message by the at least one message server (110 A ... 110 N).

5. The computer system (100) according to one of the preceding claims, wherein the at least one message server (110 A ... 110 N) stores a reception time stamp of the encrypted message on the at least one message server (110 A ... 110 N) when the at least one encrypted message is received and stored;
wherein the at least one message server (110 A ... 110 N) deletes the received message after a predetermined or predeterminable period of time as of the reception time stamp.

6. A computer-implemented method for a secure and anonymous exchange of messages over a network, comprising:
receiving, by the at least one message server (110 A ... 110 N), at least one encrypted message from at least one transmitter (120) over the network, said at least one message server (110 A ... 110 N) being adapted to store the received at least one encrypted message at least temporarily; and
providing, by the at least one message server (110 A ... 110 N), the at least one encrypted message for retrieval by at least one receiver (130) over the network
wherein data of the at least one transmitter (120) and of the at least one receiver (130) of the at least one encrypted message is encrypted.

7. The computer-implemented method according to claim 6, wherein the data of the at least one transmitter (120) and of the at least one receiver (130) of the at least one encrypted message comprises one or more of the following data:
- a transmitter address of the at least one transmitter (120); and/or
- a receiver address of the at least one receiver (130); and/or
wherein the data of the at least one transmitter (120) and of the at least one receiver (130) is encrypted together with the at least one encrypted message.

8. The computer-implemented method according to one of claims 6 or 7, wherein the at least one transmitter (120) and the at least one receiver (130) agree on an address of the at least one message server (110 A ... 110 N) at a time prior to reception of the at least one message by the at least one message server (110 A ... 110 N).

9. The computer-implemented method according to one of claims 6-8, wherein the at least one message server (110 A ... 110 N) stores a reception time stamp of the encrypted message on the at least one message server (110 A ... 110 N) when the at least one encrypted message is received and stored;
wherein the at least one message server (110 A ... 110 N) deletes the received message after a predetermined or predeterminable period of time as of the reception time stamp.

10. A computer program product comprising program parts, which, when loaded in a computer, are adapted to perform a computer-implemented method according to one of claims 6 to 9.

## Revendications

1. Système informatique (100) pour l'échange sécurisé et anonyme de messages par le biais d'un réseau, comprenant :
au moins un serveur de messages (110 A ... 110 N) qui est conçu :
- pour recevoir au moins un message crypté d'au moins un expéditeur (120) par le biais du réseau et mémoriser au moins temporairement l'au moins un message crypté ; et
- pour mettre à disposition d'au moins un destinataire (130) l'au moins un message crypté pour la consultation par le biais du réseau ;
dans lequel des données concernant l'au moins un expéditeur (120) et concernant l'au moins un destinataire (130) de l'au moins un message crypté sont cryptées.

2. Système informatique (100) selon la revendication 1, dans lequel les données concernant l'au moins un expéditeur (120) et l'au moins un destinataire (130) de l'au moins un message crypté comprennent une ou plusieurs des données suivantes :
- une adresse d'expéditeur de l'au moins un expéditeur ;
- une adresse de destinataire de l'au moins un destinataire ;
- un procédé de cryptage utilisé pour le cryptage de l'au moins un message crypté ;
- des paramètres de cryptage utilisés pour le cryptage de l'au moins un message crypté.

3. Système informatique (100) selon une des revendications précédentes, dans lequel les données concernant l'au moins un expéditeur (120) et l'au moins un destinataire (130) sont cryptées avec l'au moins un message crypté.

4. Système informatique (100) selon une des revendications précédentes, dans lequel une unification sur une adresse de l'au moins un serveur de messages (110 A ... 110 N) entre l'au moins un expéditeur (120) et l'au moins un destinataire (130) a lieu à un moment avant une réception de l'au moins un message par l'au moins un serveur de messages (110 A ... 110 N).

5. Système informatique (100) selon une des revendications précédentes, dans lequel l'au moins un serveur de messages (110 A ... 110 N) mémorise une estampille temporelle d'arrivée du message crypté sur l'au moins un serveur de messages (110 A ... 110 N) lors d'une réception et mémorisation de l'au moins un message crypté ;
dans lequel l'au moins un serveur de messages (110 A ... 110 N) efface le message reçu après une période de temps déterminée ou pouvant être déterminée au préalable à partir de l'estampille temporelle d'arrivée.

6. Procédé mis en oeuvre par ordinateur pour l'échange sécurisé et anonyme de messages par le biais d'un réseau, comprenant :
réception, par au moins un serveur de messages (110A ... 110N), d'au moins un message crypté d'au moins un expéditeur (120) par le biais du réseau, dans lequel l'au moins un serveur de messages (110A ... 110N) est conçu pour mémoriser au moins temporairement l'au moins un message crypté reçu ; et
mise à disposition, par l'au moins un serveur de messages (110A ... 110N), de l'au moins un message crypté pour la consultation par au moins un destinataire (130) par le biais du réseau ;
dans lequel des données concernant l'au moins un expéditeur (120) et concernant l'au moins un destinataire (130) de l'au moins un message crypté sont cryptées.

7. Procédé mis en oeuvre par ordinateur selon la revendication 6, dans lequel les données concernant l'au moins un expéditeur (120) et l'au moins un destinataire (130) de l'au moins un message crypté comprennent une ou plusieurs des données suivantes :
- une adresse d'expéditeur de l'au moins un expéditeur (120) ; et/ou
- une adresse de destinataire de l'au moins un destinataire (130) ; et/ou dans lequel les données concernant l'au moins un expéditeur (120) et l'au moins un destinataire (130) sont cryptées avec l'au moins un message crypté.

8. Procédé mis en oeuvre par ordinateur selon une des revendications 6 ou 7, dans lequel une unification sur une adresse de l'au moins un serveur de messages (110 A ... 110 N) entre l'au moins un expéditeur (120) et l'au moins un destinataire (130) a lieu à un moment avant une réception de l'au moins un message par l'au moins un serveur de messages (110 A ... 110 N).

9. Procédé mis en oeuvre par ordinateur selon une des revendications 6 à 8, dans lequel l'au moins un serveur de messages (110 A ... 110 N) mémorise une estampille temporelle d'arrivée du message crypté sur l'au moins un serveur de messages (110 A ... 110 N) lors d'une réception et mémorisation de l'au moins un message crypté ;
dans lequel l'au moins un serveur de messages (110 A ... 110 N) efface le message reçu après une période de temps déterminée ou pouvant être déterminée au préalable à partir de l'estampille temporelle d'arrivée.

10. Produit de programme informatique comprenant des parties de programme qui, lors de leur chargement dans un ordinateur, sont conçues pour la réalisation d'un procédé mis en oeuvre par ordinateur selon une des revendications 6 à 9.
